# EUROPÄISCHE PATENTSCHRIFT

(11) **EP 2 877 283 B1**
(45) Veröffentlichungstag und Bekanntmachung des Hinweises auf die Patenterteilung: **19.09.2018**
(21) Anmeldenummer: 13740273.1
(22) Anmeldetag: 23.07.2013
(51) Int. Cl.: F16L 21/035, F16L 21/08, F16L 37/086, B01L 3/02

(54) **KOPPLUNGSAUSBILDUNG EINES PIPETTIERKANALS EINER PIPETTIERVORRICHTUNG ZUR ANKOPPLUNG EINER PIPETTIERSPITZE DARAN**
COUPLING FORMATION OF A PIPETTING CHANNEL OF A PIPETTING DEVICE FOR COUPLING OF A PIPETTE TIP THERETO
SYSTÈME DE RACCORDEMENT D'UN EMBOUT DE PIPETAGE À UN CONDUIT DE PIPETAGE D'UN DISPOSITIF DE PIPETAGE

(30) Priorität: 25.07.2012 DE 102012213089
(43) Veröffentlichungstag der Anmeldung: 03.06.2015
(73) Patentinhaber: Hamilton Bonaduz AG, 7402 Bonaduz (CH)
(72) Erfinder: STÄDLER, Andreas, CH-7012 Felsberg (CH); PEETZ, Torsten, CH-7000 Chur (CH)
(74) Vertreter: RLTG
(86) Internationale Anmeldenummer: PCT/EP2013/065485
(87) Internationale Veröffentlichungsnummer: WO 2014/016282

(56) Entgegenhaltungen:
- EP-A1- 0 656 229
- EP-A1- 1 862 219
- DE-A1-102010 001 229
- JP-A- 2005 062 149

## Beschreibung

Die vorliegende Erfindung betrifft eine Kopplungsausbildung eines Pipettierkanals einer Pipettiervorrichtung zur Ankopplung eines Arbeitsgeräts, wie beispielsweise eine Pipettierspitze oder ein Laborgerät, Laborwerkzeug und dergleichen daran. Die Kopplungsausbildung umgibt dabei einen Pipettierkanalabschnitt, welcher sich längs einer eine axiale Richtung definierenden Pipettierkanalachse erstreckt, wobei die Kopplungsausbildung weiter an ihrem freien Längsende eine Druckvermittlungsöffnung aufweist, in die der Pipettierkanalabschnitt mündet, und wobei die Kopplungsausbildung an ihrer die Pipettierkanalachse umgebenden und sich hauptsächlich in axialer und in Umfangsrichtung um die Pipettierkanalachse erstreckenden, bezogen auf die Pipettierkanalachse radial äußeren Mantelfläche einen in radialer Richtung nachgiebigen Kopplungsvorsprung aufweist.

Derartige Kopplungsausbildungen mit einer daran ankoppelbaren Pipettierspitze als Arbeitsgerät sind beispielsweise aus der DE 199 17 375 A1 und der EP1862219A1 bekannt.
Mittels der Druckvermittlungsöffnung kann ein durch eine Druckveränderungsvorrichtung, etwa eine Pumpe oder eine Kolben-Zylinder-Anordnung, im Pipettierkanal veränderter Druck eines Arbeitsfluids zur Aspiration oder/und Dispensation eines Dosierfluids durch eine Pipettieröffnung einer angekoppelten Pipettierspitze in den von der Pipettierspitze umgebenden Dosierraum übertragen werden.

Bei der bekannten Kopplungsausbildung ruht ein durch eine Quetschhülse deformierbarer Elastomerring auf einem Auflager, welches dazu ausgebildet ist, in eine Kopplungsausnehmung einer Pipettierspitze eingetaucht zu werden.

Die Quetschhülse ist längs der Pipettierkanalachse relativ zum Auflager des O-Rings beweglich, so dass der O-Ring zwischen Quetschhülse und Auflager quetschbar ist. Der O-Ring umgibt dabei die Pipettierkanalachse. Es kommt dann, wenn die Quetschhülse zum Quetschen des O-Rings in axialer Richtung auf das Auflager zu bewegt wird, zunächst zu einer primären axialen Kompression des O-Rings und in der Folge davon zu einer radialen Expansion des O-Rings - stets bezogen auf die Pipettierkanalachse -, so dass der O-Ring nach dem Quetschvorgang einen größeren Außendurchmesser aufweist als in mechanisch unbelastetem Zustand. In dem gequetschten Zustand stellt der radial expandierte O-Ring an seinem radial äußeren Rand einen Kopplungsvorsprung bereit.

Für die bekannte Kopplungsausbildung angepasste Arbeitsgeräte, insbesondere Pipettierspitzen, weisen deshalb in einer Kopplungsausnehmung an ihrem in der Regel axialen Kopplungslängsende - bezogen auf eine Längsachse eines Kopplungsabschnitts des Arbeitsgeräts, welche in einem mit der Pipettiervorrichtung gekoppelten Zustand mit der Pipettierkanalachse zusammenfällt - eine um die Längsachse des Kopplungsabschnitts umlaufende Halteausnehmung auf, in die der gequetschte und dadurch radial expandierte O-Ring im gekoppelten Zustand eingreift und dadurch das Arbeitsgerät sowohl reib- als auch formschlüssig an der Kopplungsausbildung hält. Die Lage und Gestalt der in dem Kopplungsabschnitt des Arbeitsgeräts umlaufenden Halteausnehmung ist dabei derart gewählt, dass der radial expandierte O-Ring der Kopplungsausbildung an einem geneigten Flächenabschnitt der Halteausnehmung derart zur Anlage kommt, dass der Kopplungsabschnitt des Arbeitsgeräts, insbesondere der Pipettierspitze, durch den radial expandierten O-Ring nicht nur formschlüssig an der Kopplungsausbildung gehalten, sondern in eine Aufsteckrichtung, in welche der Kopplungsabschnitt auf die Kopplungsausbildung zum Ankoppeln an die Pipettiervorrichtung aufgesteckt wird, vorgespannt ist.

Durch diese Möglichkeit, das Arbeitsgerät bzw. dessen Kopplungsabschnitt in Aufsteckrichtung durch den gequetschten O-Ring vorzuspannen, können entsprechende Anlage- und Gegenanlageflächen an der Kopplungsausbildung und der Kopplungsausnehmung des Arbeitsgeräts in Anlageeingriff gebracht und sicher in diesem Zustand gehalten werden, wodurch eine Relativorientierung des mit der Pipettiervorrichtung gekoppelten Arbeitsgeräts bzw. seines Kopplungsabschnitts relativ zur Pipettiervorrichtung erreicht und somit ein korrekter Sitz der Pipettierspitze an der Pipettiervorrichtung im gekoppelten Zustand sichergestellt werden kann.

Durch eine gesondert von der Quetschhülse ausgebildete und relativ zum Auflager ebenfalls axial bewegliche Abstreifhülse kann das Arbeitsgerät von der bekannten Kopplungsausbildung abgestreift und somit gelöst werden.

Die bekannte Kopplungsausbildung hat sich im Wettbewerb bewährt und liefert hervorragende Ergebnisse, insbesondere eine hervorragende wiederholbare sichere Koppelbarkeit von Pipettierspitzen und sonstigen Arbeitsgeräten an der Kopplungsausbildung.

Ausgehend von der diskutierten bekannten Kopplungsausbildung ist es Aufgabe der vorliegenden Erfindung, die eingangs genannte Kopplungsausbildung derart weiterzubilden, dass sie mit weniger komplexem Aufbau bereitgestellt werden kann, ohne nennenswert an Kopplungssicherheit und Kopplungsqualität zwischen Kopplungsausbildung und zugeordnetem Arbeitsgerät einzubüßen.

Diese Aufgabe wird erfindungsgemäß gelöst durch eine gattungsgemäße Kopplungsausbildung, bei welcher der Kopplungsvorsprung im Wesentlichen unverformbar aber radial verlagerbar an einer in radialer Richtung elastischen Federanordnung vorgesehen ist.

Während also beim Stand der Technik die Nachgiebigkeit des Kopplungsvorsprungs in radialer Richtung durch die Materialelastizität des O-Rings und dessen Verformbarkeit gewährleistet ist, ist bei der vorliegenden Erfindung der Kopplungsvorsprung im Wesentlichen unverformbar, aber radial verlagerbar an der Kopplungsausbildung vorgesehen. Um die radiale Verlagerbarkeit sicherzustellen, ist an der Kopplungsausbildung eine in radialer Richtung elastische Federanordnung vorgesehen. Während also der aus dem Stand der Technik bekannte O-Ring den Kopplungsvorsprung unter Umständen nur vorübergehend, nämlich in seinem gequetschten Zustand aufweist oder den Kopplungsvorsprung jedenfalls im gequetschten Zustand in stärkerem Maße aufweist als im entspannten Zustand, ist bei der Kopplungsausbildung der vorliegenden Erfindung der Kopplungsvorsprung zeitunabhängig in stets gleichem Maße vorhanden und wird lediglich radial verlagert.

Durch die erfindungsgemäße Lösung kann die im Stand der Technik bekannte und notwendige relativbewegliche Quetschhülse eingespart werden. Stattdessen ist der Kopplungsvorsprung - im Gegensatz zum Stand der Technik, wo er erst durch Verformung eines Bauteils gebildet oder verstärkt wird - stets vorhanden und wirkt mit einer in radialer Richtung elastischen und somit mit einer zur Ausübung einer Kraft in radialer Richtung ausgebildeten Federanordnung zusammen. Dadurch ist es möglich, den Kopplungsvorsprung nach Art eines Rastvorsprungs auszubilden, auf welchen eine Pipettierspitze aufsteckbar ist, und welcher sich bei aufgestecktem Kopplungsabschnitt eines Arbeitsgeräts getrieben durch die Kraft der Federanordnung in eine Rasteingriffsposition verstellt.

Bei geeigneter Dimensionierung der Kopplungsausbildung und des daran vorgesehenen Kopplungsvorsprungs können die zur Ankopplung an Kopplungsausbildungen des Standes der Technik ausgebildeten Pipettierspitzen und sonstigen Arbeitsgeräte konstruktiv unverändert auch an die erfindungsgemäße Kopplungsausbildung gekoppelt werden. Hierzu ist lediglich erforderlich, dass der Kopplungsvorsprung der erfindungsgemäßen Kopplungsausbildung bezüglich einer vorteilhaft an der Kopplungsausbildung vorgesehenen Anschlagfläche, welche mit entsprechenden Gegenanlageflächen eines angekoppelten Kopplungsabschnitts eines Arbeitsgeräts, insbesondere einer Pipettierspitze, desselben im Anlageeingriff ist, einen vorbestimmten Abstand, in der Regel axialen Abstand, aufweist.

Als Arbeitsgerät kann im Rahmen der vorliegenden Erfindung ein beliebiges Arbeitsgerät an die Pipettiervorrichtung angekoppelt werden. Hauptsächlich ist als Arbeitsgerät an eine Pipettierspitze gedacht, die im an die Pipettiervorrichtung angekoppelten Zustand ein Aspirieren und Dispensieren von Flüssigkeiten mit Hilfe einer Druckveränderung eines von der zu dosierenden Flüssigkeit verschiedenen Arbeitsfluids in an sich bekannter Weise gestattet. Abweichend hiervon kann als Arbeitsgerät jedoch auch ein anderes Laborgerät bzw. ein Laborwerkzeug, wie etwa ein Tragwerkzeug zum Transportieren von Labware an eine Pipettiervorrichtung angekoppelt werden. Ein derartiges Tragwerkzeug können beispielsweise so genannte "MTP-Platten" sein. Auch diese Laborgeräte sind wie die zuvor genannten Pipettierspitzen durch zur Kopplung mit der Kopplungsausbildung geeignet ausgebildete Kopplungsausnehmungen mit der hier vorgestellten Kopplungsausbildung koppelbar. Wenn nachfolgend die Kopplung der Kopplungsausbildung im Zusammenwirken mit einem daran gekoppelten Arbeitsgerät am Beispiel einer Pipettierspitze als dem Arbeitsgerät erläutert wird, soll nicht vergessen werden, dass statt der Pipettierspitze auch ein anderes Laborgerät mit geeigneter Kopplungsausnehmung mit der hier vorgestellten Kopplungsausbildung in gleicher Weise koppelbar sein kann, wie dies für die Pipettierspitze der Fall ist.

Sofern in der vorliegenden Anmeldung nichts anderes angegeben ist, bezeichnen die Richtungen "axial", "radial" und "in Umfangsrichtung" Richtungen bezogen auf die Pipettierkanalachse. Wenn von einem Kopplungszustand die Rede ist, in welchem ein Arbeitsgerät, insbesondere eine Pipettierspitze, mit der erfindungsgemäßen Kopplungsausbildung gekoppelt ist, dann soll, wenn nichts Abweichendes ausgesagt ist, davon ausgegangen werden, dass die Pipettierkanalachse mit einer Längsachse der Pipettierspitze bzw. allgemein mit einer Längsachse eines Kopplungsabschnitts eines Arbeitsgeräts zusammenfällt.

Eine passive Verrastung eines Kopplungslängsendes bzw. eines Kopplungsabschnitts einer Pipettierspitze oder allgemein eines Arbeitsgeräts an der erfindungsgemäßen Kopplungsausbildung zur Kopplung derselben bzw. desselben mit der Pipettiervorrichtung kann ohne weitere Betätigung einer gesonderten Vorrichtung, wie etwa der aus dem Stand der Technik bekannten Quetschvorrichtung, dadurch erfolgen, dass der von außen zunächst unbelastete Kopplungsvorsprung gegen die elastische Kraft der Federanordnung durch eine nach radial innen auf die Pipettierkanalachse zu gerichtete Radialkraft verlagerbar ist. Somit spannt die elastische Kraft der Federanordnung den Kopplungsvorsprung nach radial außen vor. In aus dem Stand der Technik bekannter Weise kann somit ein die Kopplungsausnehmung aufweisender Kopplungsabschnitt des Arbeitsgeräts, insbesondere der Pipettierspitze, radial außen auf die Kopplungsausbildung der vorliegenden Erfindung aufgesteckt werden und dabei den Kopplungsvorsprung gegen die elastische Kraft der Federanordnung zunächst nach radial innen verlagern, bis das Arbeitsgerät relativ zur Kopplungsausbildung eine Stellung erreicht, in welcher eine zum Formschlusseingriff mit dem Kopplungsvorsprung ausgebildete Halteausnehmung im Kopplungsabschnitt des Arbeitsgeräts so gelegen ist, dass die elastische Kraft der Federanordnung den Kopplungsvorsprung zur Herstellung eines Rasteingriffs mit dem Kopplungsabschnitt eines Arbeitsgeräts nach radial außen in die Halterungsausnehmung hinein verlagert.

Vorzugsweise kann die radiale Entfernung des Kopplungsvorsprungs von der Pipettierkanalachse in einem freien, von einem Kopplungsabschnitt eines Arbeitsgeräts unbelegten Zustand der Kopplungsausbildung größer sein als dann, wenn ein Arbeitsgerät an die Kopplungsausbildung angekoppelt ist, so dass die Federanordnung im Falle einer Ankopplung eines Arbeitsgeräts den Kopplungsvorsprung mit elastischer Kraft nach radial außen zum Kopplungsabschnitt des Arbeitsgeräts hin vorspannen kann.

Um eine Ankopplung eines Arbeitsgeräts an die Kopplungsausbildung zu erleichtern und eine in Umfangsrichtung um die Pipettierkanalachse möglichst gleichmäßige Kopplungskraft durch die Federanordnung erzeugen zu können, ist vorteilhafterweise vorgesehen, dass der Kopplungsvorsprung um die Pipettierkanalachse umläuft. Dadurch kommt es bei der Ankopplung des Arbeitsgeräts an die Kopplungsausbildung auf seine Orientierung in Umfangsrichtung um die Pipettierkanalachse nicht an.

Grundsätzlich können beliebige Federanordnungen als die die elastische Kraft bereitstellende oben genannte Federanordnung verwendet werden. Beispielsweise kann eine Schraubendruckfeder mit im Wesentlichen - bezogen auf die Pipettierkanalachse - radialer Federachse in der Kopplungsausbildung angeordnet sein. Auch eine Mehrzahl von derartigen Schraubendruckfedern kann um die Pipettierkanalachse herum vorgesehen sein, um eine in Umfangsrichtung möglichst gleichmäßige elastische Kraft bereitstellen zu können. Diese wenigstens eine Schraubendruckfeder, im Falle mehrerer Federn jede Feder, kann einen gesondert von der Feder ausgebildeten Kopplungsvorsprung, etwa nach Vorbild einer Kugelraste, nach radial außen vorspannen.

Allerdings ist diese oben genannte alternative Ausführungsform sehr aufwendig in der Montage und erfordert eine große Anzahl an Bauteilen. Daher ist es vorteilhaft, wenn als die Federanordnung wenigstens eine Blattfederanordnung an der Kopplungsausbildung vorgesehen ist. Blattfedern sind geometrisch einfache Bauteile, welche mit geringem Fertigungs- oder/und Montageaufwand an der Kopplungsausbildung vorgesehen werden können.

Um zu verhindern, dass sich durch den Einsatz der Federanordnung die radiale Abmessung der Kopplungsausbildung unerwünscht erhöht, ist die wenigstens eine Blattfederanordnung vorzugsweise derart in der Kopplungsausbildung vorgesehen, dass ein Ende der Blattfederanordnung in axialer Richtung von der Druckvermittlungsöffnung weiter entfernt gelegen ist und dass ihr entgegengesetztes Ende der Druckvermittlungsöffnung in axialer Richtung näher gelegen ist. Vorzugsweise verläuft die wenigstens eine Blattfederanordnung parallel zur Pipettierkanalachse. Dadurch kann nicht nur eine Kopplungsausbildung mit radial geringen Abmessungen, sondern auch eine möglichst ausschließlich radiale Kraftwirkung der wenigstens einen Blattfederanordnung oder/und ein möglichst ausschließlich radialer Hub des Kopplungsvorsprungs sichergestellt werden.

Grundsätzlich ist es möglich, die Blattfeder einseitig von der Kopplungsausbildung auskragen zu lassen, so dass also nur ein Ende aus dem druckvermittlungsöffnungsferneren axialen Ende und dem druckvermittlungsöffnungsnäheren axialen Ende fest mit der Kopplungsausbildung verbunden ist und das jeweils andere entgegengesetzte Längsende kraftübertragend mit dem Kopplungsvorsprung zusammenwirken kann.

Eine möglichst große Stabilität der hier vorgeschlagenen Kopplungsausbildung kann jedoch dadurch erhalten werden, dass die wenigstens eine Blattfederanordnung an ihrem druckvermittlungsöffnungsnäheren axialen Ende mit einem die Druckvermittlungsöffnung aufweisenden Endabschnitt der Kopplungsausbildung fest verbunden ist und dass die Blattfederanordnung an ihrem druckvermittlungsöffnungsferneren axialen Ende mit einem kanalseitigen Abschnitt der Kopplungsausbildung fest verbunden ist. In diesem Falle ist also die Blattfederanordnung vorteilhaft an ihren beiden Längsenden an der Kopplungsausbildung fest eingespannt, so dass der Ort der Übertragung von elastischer Kraft der wenigstens einen Blattfederanordnung auf den Kopplungsvorsprung zwischen den axialen Enden der wenigstens einen Blattfederanordnung gelegen ist. Diese Ausgestaltung trägt nicht nur zu einer erhöhten Stabilität und Standfestigkeit der Kopplungsausbildung bei, die mit jedem Arbeitsgerätewechsel eine wechselnde Belastung der wenigstens einen Blattfederanordnung ertragen muss, sondern sorgt überdies wiederum für eine in radialer Richtung geringe Abmessung der Kopplungsausbildung.

Grundsätzlich kann es ausreichen, einen einzigen Kopplungsvorsprung an der Kopplungsausbildung vorzusehen, wenngleich dies nicht bevorzugt ist, da dann eine von der Federanordnung ausgeübte elastische Kraft als Kopplungskraft in Umfangsrichtung lokal unterschiedlich stark auf die Pipettierspitze einwirken wird. Um vorteilhaft eine in Umfangsrichtung möglichst gleichmäßige Ausübung der Kopplungskraft durch den Kopplungsvorsprung auf einen Kopplungsabschnitt eines Arbeitsgeräts erhalten zu können, kann vorteilhaft vorgesehen sein, dass der Kopplungsvorsprung in eine Mehrzahl von Teilkopplungsvorsprüngen unterteilt ist, von denen jeder an einer in radialer Richtung elastischen Federanordnung vorgesehen ist. Besonders dann, wenn die elastische Federanordnung als wenigstens eine Blattfederanordnung ausgebildet ist, kann jeder Teilkopplungsvorsprung mit einer ihm eigens zugeordneten Blattfederanordnung zusammenwirken oder gar an dieser vorgesehen sein.

Dabei ist es selbstverständlich möglich, dass an einer Blattfederanordnung mehrere Teilkopplungsvorsprünge vorgesehen sind. Um eine möglichst einheitliche Ausübung von Federkraft durch eine Blattfederanordnung auf einen Teilkopplungsvorsprung über die gesamte Kopplungsausbildung, insbesondere über den gesamten Umfang um die Pipettierkanalachse herum gewährleisten zu können, kann überdies vorgesehen sein, dass die Kopplungsausbildung eine Mehrzahl von, vorzugsweise parallelen, Blattfederanordnungen aufweist, von welchen jede einen Teilkopplungsvorsprung aufweist.

Vorteilhaft sind die Blattfederanordnungen zueinander parallel, was dadurch erleichtert werden kann, dass die Blattfederanordnungen, wie oben bereits angedeutet, parallel zur Pipettierkanalachse ausgerichtet sind. Durch die parallele Anordnung der Blattfederanordnungen kann eine möglichst einheitliche Kraftwirkung der Blattfederanordnungen auf zugeordnete Teilkopplungsvorsprünge oder/und auf zugeordnete gekoppelte Kopplungsabschnitte von Arbeitsgeräten erreicht werden.

Um die Beweglichkeit der Blattfederanordnungen in radialer Richtung in ausreichendem Maße bereitzustellen und überdies das Gewicht der zum Pipettieren, Transportieren oder zur sonstigen Bearbeitung zu bewegenden, also zu beschleunigenden und zu verzögernden, Kopplungsausbildung gering zu halten, kann gemäß einer Weiterbildung der vorliegenden Erfindung vorgesehen sein, dass zwei in Umfangsrichtung unmittelbar benachbarte Blattfederanordnungen zwischen sich einen Umfangsspalt aufweisen und somit in Umfangsrichtung mit Abstand voneinander angeordnet sind. Die Anordnung von zwei in Umfangsrichtung unmittelbar benachbarten Blattfederanordnungen derart, dass diese durch einen Umfangsspalt voneinander getrennt sind, gilt vorzugsweise für alle in Umfangsrichtung benachbarte, d. h. im selben Axialabschnitt gelegene Blattfederanordnungen einer Kopplungsausbildung.

Grundsätzlich kann die oben beschriebene und weitergebildete Kopplungsausbildung aus mehreren Bauteilen, etwa aus dem Endabschnitt, der wenigstens einen Federanordnung und dem kanalseitigen Abschnitt gebaut sein. Häufig ist jedoch wenigstens ein Großteil der Kopplungsausbildung, insbesondere die oben genannten Abschnitte: Endabschnitt und kanalseitiger Abschnitt, aus Kunststoff gefertigt, etwa durch Spritzgießen. In diesem, aber auch in anderen aufgrund einer erheblichen Montagevereinfachung bevorzugten Fällen, kann vorgesehen sein, dass die Federanordnung, insbesondere die wenigstens eine Blattfederanordnung, einstückig mit dem Endabschnitt oder/und dem kanalseitigen Abschnitt der Kopplungsausbildung ausgebildet sein kann.

Alternativ oder zusätzlich kann wenigstens ein Teilkopplungsvorsprung zur Verringerung der Montagearbeit zur Herstellung der Kopplungsausbildung einstückig mit der ihn jeweils tragenden Blattfederanordnung ausgebildet sein. Vorzugsweise ist eine Mehrzahl von Teilkopplungsvorsprüngen, noch stärker bevorzugt sind alle Teilkopplungsvorsprünge einstückig mit der sie jeweils tragenden Blattfederanordnung ausgebildet, so dass dann, wenn Teilkopplungsvorsprünge, Blattfederanordnungen, Endabschnitt und kanalseitiger Abschnitt der Kopplungsausbildung einstückig ausgebildet sind, eine Kopplungsausbildung ohne zusätzlichen wesentlichen Montageaufwand nahezu betriebsfertig aus einer Fertigungsvorrichtung, etwa einer Spritzgießvorrichtung, ausgeworfen werden kann.

Um weiter im Betrieb einer mit einer hier vorgeschlagenen Kopplungsausbildung versehenen Pipettiervorrichtung die korrekte Lage eines an die Kopplungsausbildung und damit an die Pipettiervorrichtung angekoppelten Kopplungsabschnitts eines Arbeitsgeräts sicherstellen zu können, kann gemäß einer vorteilhaften Weiterbildung der hier diskutierten Kopplungsausbildung vorgesehen sein, dass an einem die Druckvermittlungsöffnung aufweisenden Endabschnitt der Kopplungsausbildung eine Positionssicherungsausbildung zur Sicherung der Positionierung eines mit der Kopplungsausbildung gekoppelten Kopplungsabschnitts eines Arbeitsgeräts relativ zur Kopplungsausbildung vorgesehen ist.

Die Positionssicherungsausbildung kann mit einer entsprechenden Gegenausbildung am Kopplungsabschnitt eines Arbeitsgeräts beim Ankopplungsprozess - also in der Regel beim Aufstecken einer Pipettierspitze auf die Kopplungsausbildung derart, dass sie letztere radial außen umgibt - derart zusammenwirken, dass der Kopplungsabschnitt beim Ankoppeln an die Kopplungsausbildung in eine gewünschte Endstellung geführt wird.

Beispielsweise kann konstruktiv hierzu vorgesehen sein, dass die Positionssicherungsausbildung einen radialen Absatz oder/und einen sich längs der Pipettierkanalachse erstreckenden zylindrischen Abschnitt oder/und eine Konusfläche aufweist. Alle genannten Ausgestaltungen einer Positionierungsausbildung können mit einer entsprechenden Gegenausbildung seitens des Arbeitsgeräts zur Führung des Kopplungsabschnitts des Arbeitsgeräts in eine gewünschte Endposition beim Ankoppeln zusammenwirken.

Beispielsweise kann der radiale Absatz eine axiale Endlage des Arbeitsgeräts definieren. Der zylindrische Abschnitt kann eine gewünschte radiale Relativposition des Arbeitsgeräts relativ zur Pipettierkanalachse sichern, in der Regel so, dass eine Längsachse eines Kopplungslängsendes eines Kopplungsabschnitts, insbesondere eine Pipettierspitzenlängsachse, mit der Pipettierkanalachse zusammenfällt.

Eine Konusfläche kann sowohl eine axiale, wie auch eine radiale Endlage des Arbeitsgeräts relativ zur Kopplungsausbildung und relativ zur Pipettierkanalachse definieren oder kann zusätzlich zu den beiden zuvor genannten Ausgestaltungen einer Postionssicherungsausbildung eine Dichtfläche bereitstellen, mit welcher etwa ein Innenvolumen der Pipettierspitze gegenüber der Außenumgebung an der Kopplungsstelle abgedichtet wird.

Die Dichtigkeit eines von einer Pipettierspitze umschlossenen Pipettiervolumens gegenüber der Außenumgebung an der Kopplungsausbildung ist von maßgeblicher Bedeutung für die Funktionstüchtigkeit einer mit der Pipettierspitze arbeitenden Pipettiervorrichtung. Schließlich soll die in der Pipettierspitze bestimmungsgemäß vorgesehene Pipettieröffnung im an die Pipettiervorrichtung angekoppelten Zustand die einzige Öffnung des durch die angekoppelte Pipettierspitze verlängerten Pipettierkanals der Pipettiervorrichtung sein, um durch diese Flüssigkeit zu aspirieren und zu dispensieren.

Um diese Dichtigkeit unabhängig von der konkreten Bauart der Pipettierspitze an ihrem kopplungsseitigen Längsende bereitstellen zu können, kann weiter vorgesehen sein, dass die Kopplungsausbildung einen um die Kopplungsausbildung umlaufenden Dichtungsring aufweist, welcher dazu ausgebildet ist, in einem Kopplungszustand mit an die Kopplungsausbildung angekoppelter Pipettierspitze, ein Pipettiervolumen im Inneren der Pipettierspitze an einem Kopplungsabschnitt der Pipettierspitze gegen die Außenumgebung gasdicht abzudichten.

Der Dichtungsring ist bevorzugt aus einem Material hergestellt oder weist wenigstens an seiner bestimmungsgemäß zur Pipettierspitze hin weisenden Oberfläche ein Material auf, welches eine geringere Materialsteifigkeit aufweist, als das Material wenigstens des Kopplungsvorsprungs. Dies bedeutet, dass sich das Material des Dichtungsrings bei gleicher Ausgangsgestalt und gleicher Krafteinwirkung vorteilhafterweise stärker verformt als jenes des Kopplungsvorsprungs oder aber auch des Endabschnitts mit der Druckvermittlungsöffnung und des kanalseitigen Abschnitts. Durch diese leichtere Verformbarkeit kann sich der Dichtungsring wenigstens an seiner zur Pipettierspitze hin weisenden Oberfläche bereits bei geringem axialen Anpressdruck verformend an einen Abschnitt der Pipettierspitze anschmiegen und so das Pipettiervolumen an der Kopplungsausbildung abdichten. Dies wird für unterschiedliche geometrische Ausführungsformen des Kopplungsabschnitts einer Pipettierspitze noch dadurch erleichtert, dass vorteilhafterweise der Dichtungsring wenigstens in einem axialen Abschnitt zur Druckvermittlungsöffnung hin verjüngt ausgebildet ist. Dann kann der Dichtungsring praktisch mit einer, vorzugsweise umlaufenden, Einführschräge, insbesondere mit einem Einführkonus, ausgebildet sein.

Weiter kann der Kopplungsvorsprung vorteilhafterweise dann besonders einfach eine die Pipettierspitze in axialer Richtung zum Dichtungsring vorspannende Axialkraft auf die Pipettierspitze ausüben, wenn der Dichtungsring weiter entfernt von dem freien Längsende der Kopplungsausbildung angeordnet ist als der Kopplungsvorsprung. Eine in axiale Aufsteckrichtung wirkende Vorspannkraft kann beispielsweise dadurch erreicht werden, dass eine Anlagefläche wenigstens einer Ausbildung aus Kopplungsvorsprung und pipettierspitzenseitiger Rastausnehmung eine Neigung bezüglich der Pipettierspitzenachse aufweist. Geraten dann Kopplungsvorsprung und Rastausnehmung in Anlageeingriff aneinander, kann so eine zunächst radial wirkende Federkraft durch die Anlage an der geneigten Anlagefläche in eine axiale Spannkraft umgesetzt werden. Die Neigung kann auch durch eine entsprechende Krümmung der Anlageflächen von Kopplungsvorsprung oder/und Rastausnehmung erreicht werden.

Weiter betrifft die vorliegende Erfindung eine Pipettiervorrichtung mit einer Kopplungsausbildung, wie sie oben beschrieben und weitergebildet ist.

Um sicherzugehen, dass der Kopplungsvorsprung oder die Teilkopplungsvorsprünge nach einem Ankoppelvorgang eines Arbeitsgeräts an die Kopplungsausbildung vollständig nach radial außen verlagert werden können und damit das Arbeitsgerät sicher an die Kopplungsausbildung angekoppelt ist, kann vorgesehen sein, dass die Pipettiervorrichtung einen Pipettierkolben aufweist, welcher zumindest an seinem druckvermittlungsöffnungsnäheren Längsende derart bemessen ist und derart an der Pipettiervorrichtung im Pipettierkanal beweglich aufgenommen ist, dass er soweit axial in den Pipettierkanalabschnitt der Kopplungsanordnung einführbar und wieder aus diesem herausziehbar ist, dass sein druckvermittlungsöffnungsnäheres Längsende näher bei der Druckvermittlungsöffnung liegt als der Kopplungsvorsprung.

Somit kann der Kolben axial so weit in die Kopplungsausbildung axial vordringen, dass der Kolben den Kopplungsvorsprung bzw. die Teilkopplungsvorsprünge nach radial außen verdrängen kann, wenn der Kopplungsvorsprung nicht bereits schon durch die Federanordnung ausreichend nach radial außen verlagert wurde.

Durch die Möglichkeit der Verlagerung des Pipettierkolbens in den Axialbereich des Kopplungsvorsprungs bzw. der Teilkopplungsvorsprünge kann überdies eine Bewegung des Kopplungsvorsprungs bzw. der Teilkopplungsvorsprünge nach radial innen durch den Pipettierkolben blockiert werden, so dass ein unbeabsichtigtes Lösen eines an die Kopplungsausbildung angekoppelten Arbeitsgeräts erschwert oder sogar unmöglich gemacht wird. Dies ist insbesondere für Arbeitsgeräte vorteilhaft, welche im Vergleich mit einer Pipettierspitze ein hohes Eigengewicht aufweisen, das ein Lösen des Kopplungseingriffs begünstigen kann.

Um ein unbeabsichtigtes Ablösen gerade von im Vergleich zu Pipettierspitzen massereichen Arbeitsgeräten in noch stärkerem Maße vermeiden zu können, kann überdies daran gedacht sein, ein und dasselbe Arbeitsgerät über mehrere arbeitsgeräteseitige Kopplungsabschnitte an eine ebenso große Vielzahl von pipettiervorrichtungsseitigen Kopplungsausbildungen anzukoppeln. Dadurch wird die Traglast auf mehrere Kopplungsausbildungen verteilt und somit betragsmäßig für jede einzelne an der Kopplung beteiligte Kopplungsausbildung verringert. Beispielsweise können benachbarte Pipettierkanäle einer Pipettiervorrichtung, insbesondere eines Pipettierroboters, als Greifer zum Greifen und Transportieren von Arbeitsgeräten, wie beispielsweise den eingangs genannten "MTP-Platten", verwendet werden. Dabei kann eine Ausbildung eines derartigen Greifers durch genau zwei benachbarte Pipettierkanäle bereits ausreichen.

Weiter kann die Pipettiervorrichtung zum Lösen eines an sie bzw. an ihre Kopplungsausbildung angekoppelten Arbeitsgeräts eine axial bewegliche Abstreifvorrichtung aufweisen.

Derartige Abstreifvorrichtungen sind üblicherweise dazu ausgebildet, mit einer Anlagefläche während einer axialen Abstreifbewegung in Anlageeingriff mit einer Gegenanlagefläche einer mit der Kopplungsausbildung gekoppelten Kopplungsabschnitts eines Arbeitsgeräts zu gelangen. Wird die Abstreifbewegung nach Herstellung des Anlageeingriffs fortgesetzt, wird so das Arbeitsgerät von der Kopplungsausbildung abgestreift und folglich von der Pipettiervorrichtung entkoppelt.

Im Falle der aus dem Stand der Technik bekannten Kopplungsausbildung gemäß der DE 199 17 375 A1 kann vor dem Abstreifen die Kopplungskraft durch Entspannung des zuvor zur Kopplung gequetschten O-Rings erheblich reduziert werden, so dass zur Entkopplung der dort gezeigten Pipettierspitze von der Pipettiervorrichtung nur noch eine geringe Kraft notwendig ist.

Bei der vorliegend diskutierten Kopplungsausbildung liegt im bevorzugten Fall eine überwindbare Verrastung der Kopplungsausbildung durch den Kopplungsvorsprung mit dem daran gekoppelten Kopplungsabschnitt eines Arbeitsgeräts vor. Dieser kann nur durch ausreichende Kraftausübung in axialer Richtung auf den Kopplungsabschnitt überwunden werden. In der Regel ist der Kopplungsabschnitt und mit ihm das zugehörige Arbeitsgerät im an die Kopplungsausbildung angekoppelten Zustand ausschließlich in axialer Richtung bewegbar.

Dabei hat es sich als vorteilhaft erwiesen, wenn zur Überwindung eines solchen Rasteingriffs eine Axialkraft in Umfangsrichtung nur lokal an einer vorbestimmten Krafteinleitungsstelle und nicht gleichzeitig über den gesamten Umfang des Kopplungsabschnitts um die Pipettierkanalachse eingeleitet wird.

Dies kann konstruktiv dadurch erreicht werden, dass die Anlagefläche der Abstreifvorrichtung bezüglich der axialen Bewegungskomponente der Abstreifbewegung geneigt oder/und gekrümmt ist.

Die vorliegende Erfindung wird nachfolgend anhand der beiliegenden Figuren erläutert werden. Es stellt dar:
- Fig. 1a:: einen Längsschnitt durch einen Pipettierkanal mit einer erfindungsgemäßen Ausführungsform einer Kopplungsausbildung und mit einer zur Ankopplung daran vorbereiteten Pipettierspitze als einem Arbeitsgerät,
- Fig. 1b:: die Anordnung von Fig. 1a in perspektivischer Darstellung,
- Fig. 2a und 2b:: der Pipettierkanal und die Pipettierspitze von Fig. 1a und 1b während eines Ankoppelns der Pipettierspitze an die Kopplungsausbildung,
- Fig. 3a und 3b:: Pipettierkanal und Pipettierspitze der Fig. 1a bis 2b im Zustand einer an die Kopplungsausbildung angekoppelten Pipettierspitze,
- Fig. 4a und 4b:: Pipettierkanal und Pipettierspitze der Fig. 3a und 3b mit abgesenktem Pipettierkolben,
- Fig. 5a und 5b:: Pipettierkanal und Pipettierspitze der Fig. 3a und 3b kurz nach Beginn eines Abstreifprozesses zum Lösen der an die Kopplungsausbildung angekoppelten Pipettierspitze, und
- Fig. 6a und 6b:: Pipettierkanal und Pipettierspitze der Fig. 1a bis 5b mit von der Kopplungsausbildung abgestreifter und somit vollstädnig gelöster Pipettierspitze.

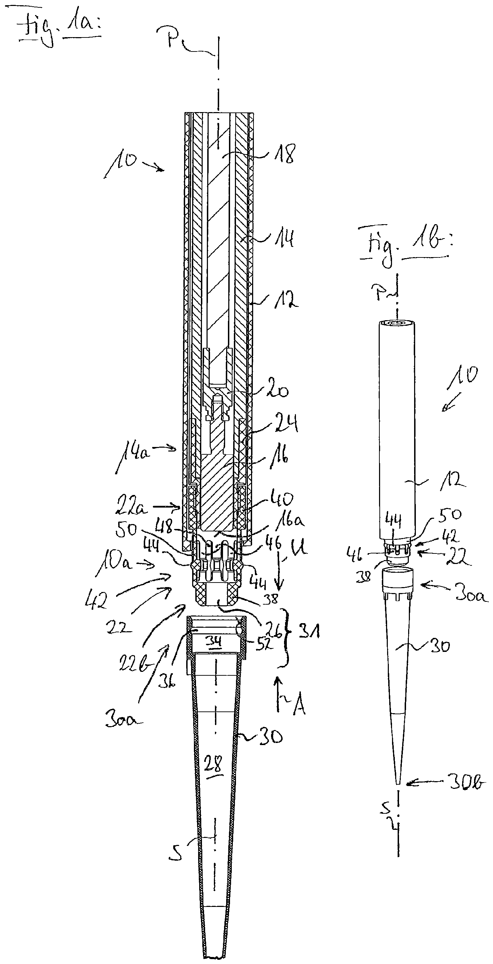

In den Fig. 1a bis 6b ist ein Pipettierkanal allgemein mit 10 bezeichnet. Der Pipettierkanal 10 erstreckt sich längs einer Pipettierkanalachse P, welche den Pipettierkanal vorzugsweise zentral durchsetzt.

Der Pipettierkanal 10 kann, beispielsweise radial bezogen auf die Pipettierkanalachse P ganz außen liegend, eine in axialer Richtung bewegliche Abstreifhülse 12 aufweisen, welche ausgehend von der in Fig. 1a gezeigten zurückgezogenen Stellung in Richtung des Pfeils U zur Bewegung antreibbar sein kann.

Der Pipettierkanal 10 kann weiter, beispielsweise radial bezüglich der Abstreifhülse 12 weiter innen liegend, einen Zylinder 14 aufweisen, in welchem ein Kolben 16 zur Veränderung eines Volumens und damit eines Drucks eines Arbeitsfluids in Fig. 1a axial unterhalb des Kolbens 16 in axialer Richtung bewegbar aufgenommen sein kann. Der Kolben 16 kann hierzu in an sich bekannter Weise mit einer axial beweglichen Kolbenstange 18 verbunden sein, etwa unter Zwischenanordnung eines Verbindungselements 20.

An seinem der zur Veränderung des Arbeitsfluiddrucks wirksamen Kolbenfläche 16a näher gelegenen Längsende 10a kann der Pipettierkanal 10 eine Kopplungsausbildung 22 aufweisen, welche beispielsweise über ein Verbindungsglied 24 mit dem Zylinder 14 verbunden sein kann.

Beispielsweise kann das Verbindungsglied 24 auf ein Verbindungsende 14a des Zylinders 14 aufgesteckt und gegebenenfalls zusätzlich mit diesem verklebt sein. Auf das Verbindungsglied 24 kann wiederum ein Verbindungslängsende 22a der Kopplungsausbildung 22 aufgeschraubt oder aufgeclipst sein. Alternativ oder zusätzlich kann das Verbindungslängsende 22a mit dem Verbindungsglied verklebt, verschweißt oder sonstwie unlösbar verbunden sein.

Vorzugsweise befinden sich die Verbindungsstellen der Kopplungsausbildung 22 mit dem Verbindungsglied 24 und des Verbindungsglieds 24 mit dem Zylinder 14 radial innerhalb der Abstreifhülse 12 und sind von dieser umgeben und gegen Einflüsse von außen abgeschirmt.

An ihrem freien Längsende 22b weist die Kopplungsausbildung 22 eine Druckvermittlungsöffnung 26 auf, durch welche ein unmittelbar unterhalb der Kolbenfläche 16a herrschender Arbeitsfluiddruck in einen Dosierraum 28 einer mit der Kopplungsausbildung 22 koppelbaren Pipettierspitze 30 übertragbar ist. Die Pipettierspitze 30 ist dabei nur eine beispielhafte Ausgestaltung eines allgemeinen Arbeitsgeräts. Anstelle der Pipettierspitze 30 kann auch ein anderes Laborgerät, etwa ein Drahtwerkzeug, wie etwa eine "MTP-Platte" an die Kopplungsausbildung 22 ankoppelbar sein.

Die Druckvermittlungsöffnung 26 ist in einem Endabschnitt 38 ausgebildet, welcher dem freien Längsende 22b der Kopplungsausbildung zuzurechnen ist.

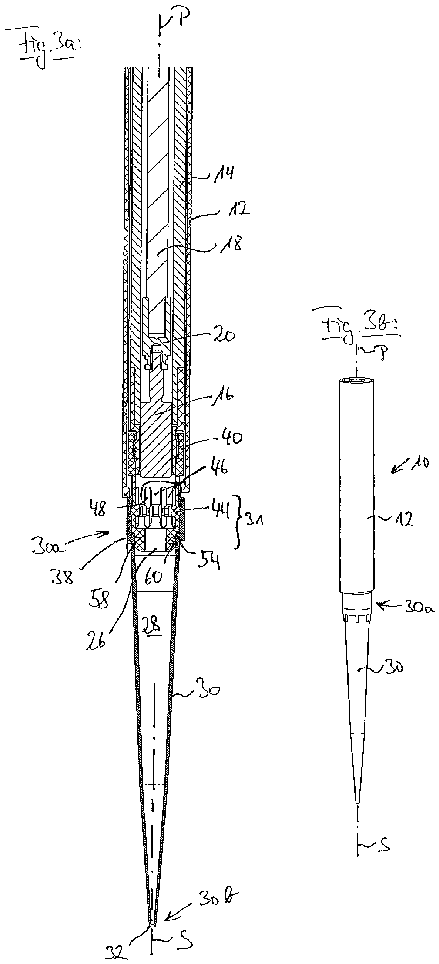

Die Pipettierspitze 30 weist in an sich bekannter Weise ein Kopplungslängsende 30a und ein Dosierlängsende 30b auf. Das Kopplungslängsende 30a ist mit einem Kopplungsabschnitt 31 zur Ankopplung an das freie Längsende 22b der Kopplungsausbildung 22 ausgebildet, während das Dosierlängsende 30b in an sich bekannter Weise eine Pipettieröffnung 32 aufweist (siehe etwa Fig. 3a), durch welche hindurch eine Flüssigkeit mittels einer Druckveränderung des Arbeitsfluids in den Dosierraum 28 der Pipettierspitze 30 hinein aspirierbar und aus diesem hinaus dispensierbar ist.

Das Kopplungslängsende 30a der Pipettierspitze 30 ist in an sich bekannter Weise dazu ausgebildet, radial außen die Kopplungsausbildung 22 umgebend auf diese in Aufsteckrichtung A aufgesteckt zu werden. Dabei kann das freie Längsende 22b der Kopplungsausbildung 22 in eine im Kopplungslängsende 30a ausgebildete Kopplungsausnehmung 34 der Pipettierspitze 30 eingeführt und dort verrastet werden. Hierzu kann in der Kopplungsausnehmung 34 eine um eine Pipettierspitzenachse S umlaufende Halteausnehmung 36 als eine Rastausnehmung vorgesehen sein.

Im gekoppelten Zustand sind die Pipettierkanalachse P und die Pipettierspitzenachse S üblicherweise kollinear. Aus diesem Grunde sollte die Pipettierspitze 30 für den Vorgang des Ankoppelns an die Kopplungsausbildung 22 bereits möglichst mit zur Pipettierkanalachse P kollinearer Pipettierspitzenachse S ausgerichtet sein.

Mit axialem Abstand von ihrem Endabschnitt 38 kann die Kopplungsausbildung 22 einen Kanalabschnitt 40 aufweisen, welcher dem Verbindungslängsende 22a der Kopplungsausbildung zuzurechnen ist.

Axial zwischen dem Endabschnitt und dem Kanalabschnitt 40 der Kopplungsausbildung 22 kann eine Federanordnung 42 angeordnet sein, welche mit einer Vielzahl von im Wesentlichen unverformbaren, aber gegen die elastische Federkraft der Federanordnung 22 radial verlagerbaren Teilkopplungsvorsprüngen 44 zusammenwirkt. Die Gesamtheit der Teilkopplungsvorsprünge 44 bildet einen Kopplungsvorsprung im Sinne dieser Anmeldung.

Die Federanordnung 42 umfasst vorteilhafterweise eine Mehrzahl von Blattfederanordnungen 46, welche vorteilhaft raumsparend parallel zur Pipettierkanalachse P verlaufend angeordnet sein können. Dies bedeutet, dass ihre größte Abmessung als Längsabmessung parallel zur Pipettierkanalachse P verläuft.

Um ausreichend radialen Bewegungsraum für die Blattfederanordnungen 46 bereitzustellen, ist vorzugsweise zwischen zwei in Umfangsrichtung unmittelbar benachbarten Blattfederanordnungen 46 ein Spaltraum 48 vorgesehen, so dass die Blattfederanordnungen 46 in Umfangsrichtung mit Abstand voneinander angeordnet sind.

Vorteilhafterweise sind die Blattfederanordnungen 46 an ihrem von der Druckvermittlungsöffnung 26 fern liegenden Längsenden einstückig mit dem Kanalabschnitt 40 ausgebildet. Ebenso vorteilhaft können die Blattfederanordnungen 46 an ihrem der Druckvermittlungsöffnung 26 näher gelegenen Längsende einstückig mit dem Endabschnitt 38 ausgebildet sein.

Weiter kann vorteilhafterweise zur Verringerung des Herstellungs- und Montangeaufwands die Vielzahl von Teilkopplungsvorsprüngen 44 einstückig mit den Blattfederanordnungen 46 ausgebildet sein, wobei vorzugsweise eine 1:1-Zuordnung derart besteht, dass an jeder Blattfederanordnung 46 genau ein Teilkopplungsvorsprung 44 ausgebildet ist und jeder Teilkopplungsvorsprung 44 mit genau einer Blattfederanordnung 46 zusammenwirkt und gegen die radiale Kraft derselben radial zur Pipettierkanalachse P verlagerbar ist.

Weiter kann der Pipettierkanal 10 einen Dichtungsring 50 aufweisen, welcher vorteilhafterweise vollständig um die Pipettierkanalachse umläuft, und die Kopplungsausbildung 22 radial außen derart umgibt, dass eine nach radial außen weisende Anlagefläche desselben bei an die Kopplungsausbildung 22 angekoppelter Pipettierspitze 30 an eine entsprechende Gegenanlagefläche 52 in der Kopplungsausnehmung 34 gelangen kann, um den Kopplungsbereich zwischen Kopplungsausbildung 22 und Pipettierspitze 30 zur Außenumgebung hin abzudichten und einen Verlust von Arbeitsfluiddruck durch eine Undichtigkeit dort zu vermeiden.

Vorzugsweise ist der Dichtungsring 50 axial weiter von der Druckvermittlungsöffnung 26 entfernt gelegen als die Teilkopplungsvorsprünge 44, so dass letztere in ihrer Kopplungswirkung durch den Dichtunganlageeingriff des Dichtungsrings 50 mit der Pipettierspitze 30 nicht beeinträchtigt sind.

Der Dichtungsring 50 kann aus einem Material hergestellt sein, welches sich bei gleicher Ausgangsgestalt und gleicher mechanischer Belastung stärker verformt als das Material der Kopplungsausbildung oder/und das Material der Pipettierspitze 30. Somit kann der Dichtungsring 50 durch Verformung eventuell vorhandene Spalte zwischen Pipettierspitze und Kopplungsausbildung 22 füllen und schließen.

Die Kopplungsausbildung 22 ist, wie in dem vorliegenden Beispiel dargestellt, vorzugsweise einstückig als Spritzgussteil gestaltet, wobei am Verbindungslängsende gewünschtenfalls ein Gewinde vorgesehen sein kann, das bereits beim Spritzgießen hergestellt werden kann, was allerdings die Entformung der Kopplungsausbildung aus der Spritzgussform erschwert, oder welche nachträglich in das Bauteil eingeschnitten sein kann.

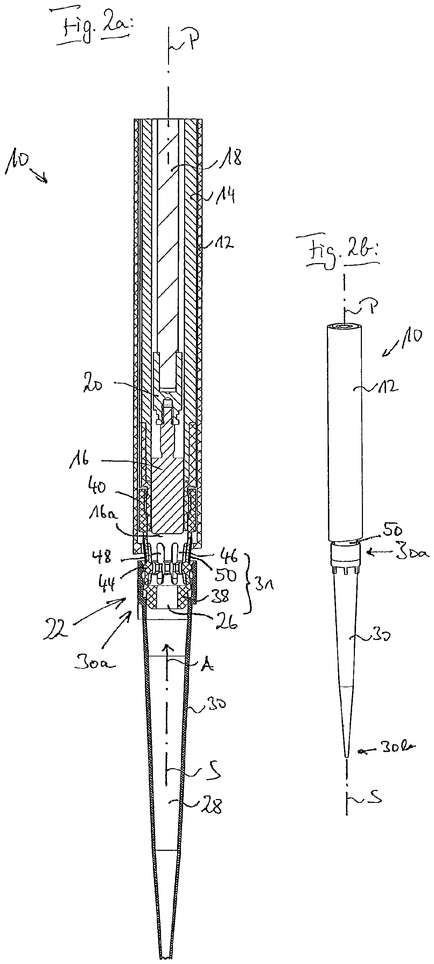

In den Fig. 2a und 2b ist ein Ankopplungsvorgang der Pipettierspitze 30 an die Kopplungsausbildung 22 dargestellt. Eine Innenwandung der Kopplungsausnehmung 34, insbesondere die axial über der Halteausnehmung 36 gelegene Dichtungsgegenanlagefläche 52 (siehe Fig. 1a) drückt zu dem in den Fig. 2a und 2b dargestellten Zeitpunkt die Teilkopplungsvorsprünge 44 gegen die Federkraft der Blattfederanordnungen 46 nach radial innen auf die Pipettierkanalachse zu, so dass die Pipettierspitze 30 mit ihrem kopplungsseitigen Längsende 30a in Aufsteckrichtung A auf die Kopplungsausbildung 22 aufgesteckt werden kann. Durch die Radialverlagerung der Teilkopplungsvorsprünge 44 gegen die elastische Kraft der Blattfederanordnungen 46 wird zwar die zum Aufstecken bzw. Ankoppeln der Pipettierspitze 30 an die Kopplungsausbildung 22 und damit an den Pipettierkanal 10 benötigte Kraft erhöht, jedoch werden bisher notwendige Kopplungsmittel am Pipettierkanal 10 dadurch vermieden.

In den Fig. 3a und 3b ist die Pipettierspitze 30 vollständig an die Kopplungsausbildung 22 und damit an den Pipettierkanal 10 angekoppelten Zustand dargestellt. Die vorteilhafterweise in einer zur Pipettierkanalachse P orthogonalen Ebene gelegenen Teilkopplungsvorsprünge 44 sind, getrieben durch die elastische Kraft der Blattfederanordnungen 46 in die Halteausnehmung 36 eingerückt und stellen somit eine formschlüssige Kopplung zwischen der Pipettierspitze 30 und der Kopplungsausbildung 22 her. Je nach Materialpaarung an der Kopplungsstelle, also nach dem an der Kopplungsausbildung 22 zur Pipettierspitze 30 hin weisende Material sowie nach dem am Kopplungslängsende 30a der Pipettierspitze 30 nach radial innen zur Kopplungsausbildung 22 hin weisenden Material kann die formschlüssige Kopplung, welche vorzugsweise eine überwindbare Verrastung ist, durch einen Reibschluss zwischen den beteiligten Materialien und Bauteilen verstärkt werden.

Wie in Fig. 3a zu erkennen ist, liegt im fertig angekoppelten Zustand eine in axiale Richtung weisende Positionierungsanlagefläche 54, welche vorzugsweise um die Pipettierachse P kontinuierlich umläuft, an einer entsprechenden Positionierungsgegenanlagefläche 56 der Pipettierspitze 30 an und definiert somit die axiale Lage der Pipettierspitze 30 relativ zur Kopplungsausbildung 22.

Sowohl die Positionierungsanlagefläche 54 an der Kopplungsausbildung 22 wie auch die Positionierungsgegenanlagefläche 56 an der Pipettierspitze 30 sind im dargestellten Beispiel durch radiale Absätze gebildet, im Falle der Kopplungsausbildung 22 durch einen radialen Absatz zwischen dem Endabschnitt 38 und der Federanordnung 42.

Weiter ist eine in radiale Richtung weisende Mantelfläche des Endabschnitts 38 bevorzugt in Anlageeingriff mit einer entsprechenden in radiale Richtung weisenden Gegenanlagefläche 60 der Pipettierspitze 30, um die Pipettierspitze 30 auch in radialer Richtung bezüglich der Pipettierkanalachse P auszurichten.

Der Formschlusseingriff der Teilkopplungsvorsprünge 44 in die Halteausnehmung 36 ist vorzugsweise derart ausgestaltet, dass eine resultierende Vorspannkraft auf die Pipettierspitze 30 wirkt, welche diese in Aufsteckrichtung A vorspannt. Dies kann in dem hier gezeigten Beispiel beispielsweise dadurch erreicht werden, dass die Teilkopplungsvorsprünge 44 nur an einem axial der Dichtungsanlagefläche 52 näher gelegenen und zum Pipettierlängsende 30b hin weisenden Flächenabschnitt der konkaven Halteausnehmung 36 anliegen.

Wie in Fig. 3a weiter zu erkennen ist, liegt in dem dort gezeigten vollständig angekoppelten Zustand die Dichtungsanlagefläche 52 an der nach radial außen weisenden Fläche des Dichtungsrings 50 an, so dass die Kopplungsstelle zwischen Kopplungsausbildung 22 und Pipettierspitze 30 gasdicht abgedichtet ist. Zu diesem Zweck reicht der Dichtungsring 50 in axialer Richtung vorteilhafterweise über das axiale Längsende der zwischen den in Umfangsrichtung benachbarten Blattfederanordnungen 46 vorgesehenen Spalte 48 hinaus.

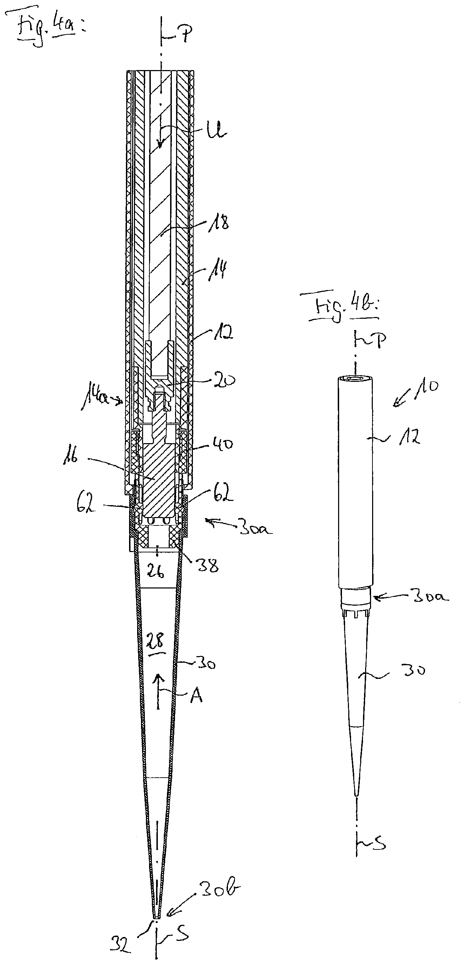

In Fig. 4a ist gezeigt, wie durch Bewegung des Pipettierkolbens 16 zur Druckvermittlungsöffnung 26 hin die gewünschte Rastpositionierung der Teilkopplungsvorsprünge 44 bei an die Kopplungsausbildung 22 angekoppelter Pipettierspitze 30 überprüft oder sogar hergestellt werden kann. Hierzu reicht es gemäß einer vorteilhaften Weiterbildung der vorliegenden Erfindung aus, wenn der Kolben 16 so weit zur Durckvermittlungsöffnung 26 abgesenkt wird, dass seine Kolbenfläche 16a näher an der Druckvermittlungsöffnung 26 gelegen ist als die Teilkopplungsvorsprünge 44. Die Teilkopplungsvorsprünge 44 liegen vorzugsweise in einer zur Pipettierkanalachse P orthogonalen Anordnungsebene.

Zum Zweck der korrekten Positionierung der Teilkopplungsvorsprünge 44 können diese oder/und die Blattfederanordnungen 46 nach radial innen weisende Vorsprünge 62 aufweisen, welche in radialer Richtung derart bemessen sind, dass die lichte Weite zwischen einander gegenüberliegenden Vorsprüngen 62 bei korrekter Positionierung der Teikopplungsvorsprünge 44 bzw. der mit ihnen zusammenwirkenden Blattfederanordnungen 46 der Außenabmessung des Kolbens 16 entspricht. Somit können durch den Kolben 16 nicht weit genug nach radial außen verlagerte Teilkopplungsvorsprünge 44 durch den Kolben 16 nach radial außen bewegt werden.

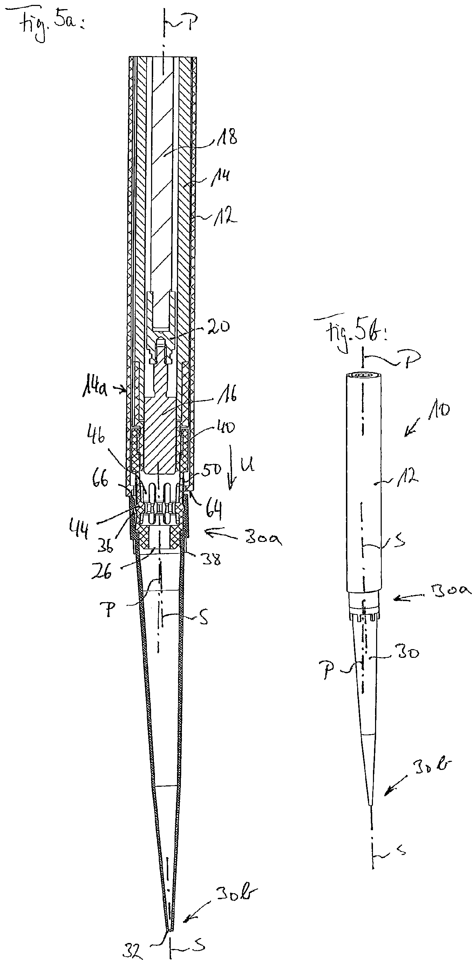

In den Fig. 5a und 5b ist der Beginn eines Abstreifvorgangs gezeigt, mit welchem eine an der hier diskutierten Kopplungsausbildung 22 der angekoppelten Pipettierspitze 30 von dieser wieder lösbar ist.

Hierzu wird die Abstreifhülse 12 in Richtung des Pfeils U relativ zur Kopplungsausbildung 22 bewegt. Die Abstreifhülse 12 weist eine in axialer Richtung zur Kopplungsausbildung 22 hin weisende Anlagefläche 64 auf, mit welcher diese beim Abstreifen in Anlageeingriff mit einer in axialer Richtung zur Abstreifhülse 12 weisenden Gegenanlagefläche 66 der Pipettierspitze 30 gelangt.

Dabei ist es vorteilhaft, wenn die Anlagefläche 64 der Abstreifhülse 12 bezüglich der Pipettierkanalachse P bzw. bezüglich der Bewegungsrichtung U nicht orthogonal, sondern mit einer vorbestimmten Neigung bezüglich einer zur Pipettierkanalachse P orthogonalen Ebene vorgesehen ist, während die Gegenanlagefläche 66 der Pipettierspitze 30 im an die Kopplungsausbildung 22 angekoppelten Zustand vorteilhafterweise in einer zur Pipettierkanallängsachse P und zur damit kollinearen Pipettierspitzenachse S orthogonalen Ebene gelegen ist.

Dadurch erfolgt die Krafteinleitung der zum Überwinden des durch die Teilkopplungsvorsprünge 44, die Blattfederanordnungen 46 und die Halteausnehmung 36 hergestellten Rasteingriffs benötigten axialen Abstreifkraft nicht gleichzeitig über den vollen Umfang der Gegenanlagefläche 66, sondern in Umfangsrichtung zunächst lokal lediglich an einer Stelle bzw. in einem Umfangsbereich. Dadurch wird der Verrastungseingriff zunächst an dieser Stelle gelöst, wodurch die Pipettierspitzenachse S bezüglich der Pipettierkanalachse in eine Schrägstellung verbracht wird.

Bei Fortsetzung der Axialbewegung der Abstreifhülse 12 in Richtung des Pfeils U gelangt nun der Rest der Anlagefläche 64, welcher bisher noch nicht in Anlageeingriff mit der Gegenanlagefläche 66 war, in Anlageeingriff mit dieser, so dass der Verrastungseingriff der Kopplungsausbildung 22 mit dem Kopplungslängsende 30a der Pipettierspitze auch im übrigen Umfangsabschnitt gelöst wird.

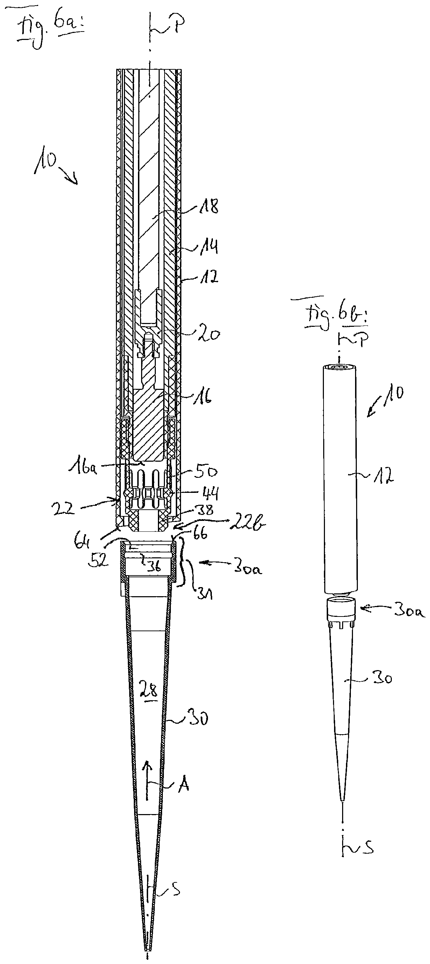

Schließlich wird so die Pipettierspitze 30 vollständig von der Kopplungsausbildung 22 abgestreift, wie in den Fig. 6a und 6b gezeigt ist, in welchen die Abstreifhülse 12 an ihrem unteren Totpunkt dargestellt ist. Erreicht die Abstreifhülse 12 diese Stellung, fällt die Pipettierspitze 30 vollständig von der Kopplungsausbildung 22 ab oder ist bereits von dieser abgefallen.

Anstelle der hier dargestellten Pipettierspitze 30 kann ein beliebiges Arbeitsgerät an die hier vorgestellte Kopplungsausbildung 22 angekoppelt werden oder von dieser wieder gelöst werden, so lange der Kopplungsabschnitt 31 des zur Ankopplung mit der Kopplungsausbildung 22 ausgebildeten Arbeitsgeräts mit den vorliegend zur Ankopplung mit der Kopplungsausbildung 22 notwendigen technischen Merkmalen ausgestattet ist.

## Patentansprüche

1. Kopplungsausbildung (22) eines Pipettierkanals (10) einer Pipettiervorrichtung zur Ankopplung eines Arbeitsgeräts (30), wie etwa einer Pipettierspitze (30) oder einem Laborgerät, Laborwerkzeug und dergleichen, daran, wobei die Kopplungsausbildung (22) einen Pipettierkanalabschnitt umgibt, welcher sich längs einer eine axiale Richtung definierenden Pipettierkanalachse (P) erstreckt, wobei die Kopplungsausbildung (22) weiter an ihrem freien Längsende (22b) eine Druckvermittlungsöffnung (26) aufweist, in die der Pipettierkanalabschnitt mündet und an ihrer die Pipettierkanalachse (P) umgebenden und sich hauptsächlich in axialer und in Umfangsrichtung um die Pipettierkanalachse (P) erstreckenden bezogen auf die Pipettierkanalachse (P) radial äußeren Mantelfläche einen in radialer Richtung nachgiebigen Kopplungsvorsprung (44) aufweist,
**dadurch gekennzeichnet, dass** der Kopplungsvorsprung (44) im Wesentlichen unverformbar aber radial verlagerbar an einer in radialer Richtung elastischen Federanordnung (42) vorgesehen ist.

2. Kopplungsausbildung nach Anspruch 1,
**dadurch gekennzeichnet, dass** der unbelastete Kopplungsvorsprung (44) gegen die elastische Kraft der Federanordnung (42) durch eine nach radial innen auf die Pipettierkanalachse (P) zu gerichtete Radialkraft radial verlagerbar ist.

3. Kopplungsausbildung nach Anspruch 1 oder 2,
**dadurch gekennzeichnet, dass** der Kopplungsvorsprung (44) um die Pipettierkanalachse (P) vollständig umläuft.

4. Kopplungsausbildung nach einem der vorhergehenden Ansprüche,
**dadurch gekennzeichnet, dass** die Federanordnung (42) wenigstens eine Blattfederanordnung (46) umfasst, welche sich von einem druckvermittlungsöffnungsferneren axialen Ende zu einem druckvermittlungsöffnungsnäheren axialen Ende erstreckt.

5. Kopplungsausbildung nach Anspruch 4,
**dadurch gekennzeichnet, dass** die wenigstens eine Blattfederanordnung (46) an ihrem druckvermittlungsöffnungsnäheren axialen Ende mit einem die Druckvermittlungsöffnung (26) aufweisenden Endabschnitt (38) der Kopplungsausbildung (22) fest verbunden ist und dass die Blattfederanordnung (46) an ihrem druckvermittlungsöffnungsferneren axialen Ende mit einem kanalseitigen Abschnitt (40) der Kopplungsausbildung (22) fest verbunden ist.

6. Kopplungsausbildung nach einem der vorhergehenden Ansprüche,
**dadurch gekennzeichnet, dass** der Kopplungsvorsprung (44) in eine Mehrzahl von Teilkopplungsvorsprüngen (44) unterteilt ist, von denen jeder an einer in radialer Richtung elastischen Federanordnung (42), insbesondere Blattfederanordnung (46), vorgesehen ist.

7. Kopplungsausbildung nach Anspruch 6,
**dadurch gekennzeichnet, dass** sie eine Mehrzahl von, vorzugsweise parallelen, Blattfederanordnungen (46) aufweist, von welchen jede einen Teilkopplungsvorsprung (44) aufweist.

8. Kopplungsausbildung nach Anspruch 7,
**dadurch gekennzeichnet, dass** zwei in Umfangsrichtung unmittelbar benachbarte Blattfederanordnungen (46) zwischen sich einen Umfangsspalt (48) aufweisen und somit in Umfangsrichtung mit Abstand voneinander angeordnet sind.

9. Kopplungsausbildung nach einem der Ansprüche 7 oder 8,
**dadurch gekennzeichnet, dass** wenigstens ein Teilkopplungsvorsprung (44), vorzugsweise eine Mehrzahl von Teilkopplungsvorsprüngen (44), noch stärker bevorzugt alle Teilkopplungsvorsprünge (44), einstückig mit der sie jeweils tragenden Blattfederanordnung (46) ausgebildet sind.

10. Kopplungsausbildung nach einem der vorhergehenden Ansprüche, insbesondere unter Einbeziehung des Anspruchs 5,
**dadurch gekennzeichnet, dass** an einem die Druckvermittlungsöffnung (26) aufweisenden Endabschnitt (38) der Kopplungsausbildung (22) eine Positionssicherungsausbildung (54, 58) zur Sicherung der Positionierung einer mit der Kopplungsausbildung (22) gekoppelten Pipettierspitze (30) relativ zur Kopplungsausbildung (22) vorgesehen ist.

11. Kopplungsausbildung nach Anspruch 10,
**dadurch gekennzeichnet, dass** die Positionssicherungsausbildung (54, 58) einen radialen Absatz (bei 54) oder/und einen sich längs der Pipettierkanalachse erstreckenden zylindrischen Abschnitt (58) oder/und eine Konusfläche aufweist.

12. Kopplungsausbildung nach einem der vorhergehenden Ansprüche,
**dadurch gekennzeichnet, dass** sie einen um die Kopplungsausbildung (22) umlaufenden Dichtungsring (50) aufweist, welcher dazu ausgebildet ist, in einem Kopplungszustand mit an die Kopplungsausbildung (22) angekoppelter Pipettierspitze (30), ein Pipettiervolumen (28) im Inneren der Pipettierspitze (30) an einem Kopplungsabschnitt (30a) der Pipettierspitze (30) gegen die Außenumgebung gasdicht abzudichten.

13. Kopplungsausbildung nach Anspruch 12,
**dadurch gekennzeichnet, dass** der Dichtungsring (50) wenigstens in einem axialen Abschnitt zur Druckvermittlungsöffnung (26) hin verjüngt ausgebildet ist.

14. Kopplungsausbildung nach Anspruch 12 oder 13,
**dadurch gekennzeichnet, dass** der Dichtungsring (50) weiter entfernt von dem freien Längsende (22b) der Kopplungsausbildung (22) angeordnet ist als der Kopplungsvorsprung (44).

15. Kopplungsausbildung nach einem der vorhergehenden Ansprüche,
**dadurch gekennzeichnet, dass** die Federanordnung (42), der Kopplungsvorsprung (44), ein die (26) Druckvermittlungsöffnung aufweisender Endabschnitt (38) der Kopplungsausbildung und ein von dem freien Längsende (22b) der Kopplungsausbildung (22) axial weiter entfernt als die Federanordnung (42) gelegener kanalseitiger Abschnitt (40) der Kopplungsausbildung (22) einstückig ausgebildet sind.

16. Pipettiervorrichtung mit einer Kopplungsausbildung (22) nach einem der vorhergehenden Ansprüche und mit einem Pipettierkanal (10), von welchem der Pipettierkanalabschnitt der Kopplungsausbildung (22) einen Abschnitt bildet,
**dadurch gekennzeichnet, dass** die Pipettiervorrichtung einen Pipettierkolben (16) aufweist, welcher zumindest an seinem druckvermittlungsöffnungsnäheren Längsende (bei 16a) derart bemessen ist und derart an der Pipettiervorrichtung im Pipettierkanal (10) beweglich aufgenommen ist, dass er soweit axial in den Pipettierkanalabschnitt der Kopplungsanordnung (22) einführbar und wieder aus diesem herausziehbar ist, dass sein druckvermittlungsöffnungsnäheres Längsende (bei 16a) näher an der Druckvermittlungsöffnung (26) liegt als der Kopplungsvorsprung (44).

17. Pipettiervorrichtung mit einer Kopplungsausbildung (22) nach einem der vorhergehenden Ansprüche und mit einem Pipettierkanal (10), von welchem der Pipettierkanalabschnitt der Kopplungsausbildung (22) einen Abschnitt bildet, nach Anspruch 16, wobei die Pipettiervorrichtung eine axial bewegliche Abstreifvorrichtung (12) aufweist, welche dazu ausgebildet ist, während einer axialen Abstreifbewegung mit einer Anlagefläche (64) in Anlageeingriff mit einer Gegenanlagefläche (66) eines mit der Kopplungsausbildung (22) gekoppelten Arbeitsgeräts (30), etwa einer Pipettierspitze (30) oder eines Laborgeräts, Laborwerkzeugs und dergleichen, zu gelangen, um durch Fortsetzung der Abstreifbewegung nach Herstellung des Anlageeingriffs die Pipettierspitze (30) von der Kopplungsausbildung (22) abzustreifen und so von der Pipettiervorrichtung zu entkoppeln,
**dadurch gekennzeichnet, dass** die Anlagefläche (64) der Abstreifvorrichtung (12) bezüglich der axialen Bewegungsrichtung (U) der Abstreifbewegung geneigt oder/und gekrümmt ist.

## Claims

1. Coupling formation (22) of a pipetting channel (10) of a pipetting device for coupling of an implement (30) such as, for example, a pipette tip (30) or a laboratory instrument, laboratory tool and the like thereon, wherein the coupling formation (22) surrounds a pipetting channel section which extends along a pipetting channel axis (P) defining an axial direction, wherein the coupling formation (22) further includes a pressure-imparting orifice (26) on its free longitudinal end (22b), into which the pipetting channel section opens and includes, at its surface which is radially external with respect to the pipetting channel axis (P) and which surrounds the pipetting channel axis (P), and extending primarily in the axial and in the circumferential direction about the pipetting channel axis (P), a coupling projection (44) yielding in the radial direction,
**characterized in that** the coupling projection (44) is provided substantially undeformable but radially displaceable on a spring assembly (42) which is elastic in the radial direction.

2. Coupling formation according to claim 1,
**characterized in that** the unloaded coupling projection (44) is radially displaceable against the elastic force of the spring assembly (42) by a radial force directed radially inward toward the pipetting channel axis (P).

3. Coupling formation according to claim 1 or 2,
**characterized in that** the coupling projection (44) circulates completely about the pipetting channel axis (P).

4. Coupling formation according to one of the preceding claims,
**characterized in that** the spring assembly (42) comprises at least one leaf spring assembly (46) which extends from an axial end farther from the pressure-imparting orifice to an axial end closer to the pressure-imparting orifice.

5. Coupling formation according to claim 4,
**characterized in that** the at least one leaf spring assembly (46) is fixedly connected on its axial end closer to the pressure-imparting orifice to an end section (38) of the coupling formation (22), which end section (38) includes the pressure-imparting orifice (26), and that the leaf spring assembly (46) is fixedly connected on its axial end farther from the pressure-imparting orifice to a channel-side section (40) of the coupling formation (22).

6. Coupling formation according to one of the preceding claims,
**characterized in that** the coupling projection (44) is divided into a plurality of partial coupling projections (44) of which each is provided on a spring assembly (42), in particular a leaf spring assembly (46), which is elastic in the radial direction.

7. Coupling formation according to claim 6,
**characterized in that** it includes a plurality of preferably parallel leaf spring assemblies (46) of which each includes a partial coupling projection (44).

8. Coupling formation according to claim 7,
**characterized in that** two leaf spring assemblies (46) immediately adjacent in the circumferential direction have a circumferential gap (48) between them and are thus disposed spaced from each other in the circumferential direction.

9. Coupling formation according to one of claims 7 or 8,
**characterized in that** at least one partial coupling projection (44), preferably a plurality of partial coupling projections (44), even more preferably all partial coupling projections (44), are formed in one-piece with the respective carrying leaf spring assembly (46).

10. Coupling formation according to one of the preceding claims, in particular taking into account claim 5,
**characterized in that** a position-securing formation (54, 58) for securing the positioning of a pipette tip (30) coupled with the coupling formation (22) relative to the coupling formation (22) is provided on an end section (38) of the coupling formation (22), which end section includes the pressure-imparting orifice (26).

11. Coupling formation according to claim 10,
**characterized in that** the position-securing formation (54, 58) includes a radial shoulder (with 54) and/or a cylindrical section (58) extending along the pipetting channel axis (P) and/or a conical surface.

12. Coupling formation according to one of the preceding claims,
**characterized in that** it has a seal ring (5) extending around the coupling formation (22), which is formed to seal a pipette volume (28) in the interior of the pipette tip (30) on a coupling section (30a) of the pipette tip (30) against the external environment in a coupling state with the pipette tip (30) coupled on the coupling formation (22).

13. Coupling formation according to claim 12,
**characterized in that** the seal ring (50) is formed tapered towards the pressure-imparting orifice (26) at least in an axial section.

14. Coupling formation according to claim 12 or 13,
**characterized in that** the seal ring (50) is disposed farther away from the free longitudinal end (22b) of the coupling formation (22) than the coupling projection (44).

15. Coupling formation according to one of the preceding claims,
**characterized in that** the spring assembly (42), the coupling projection (44), an end section (38) of the coupling formation, which end section (38) includes the pressure-imparting orifice, and a channel-side section (40) of the coupling formation (22), which channel-side section (40) is located farther away from the free longitudinal end (22b) of the coupling formation (22) than the spring assembly (42), are formed one-piece.

16. Pipetting device including a coupling formation (22) according to one of the preceding claims and including a pipetting channel (10) of which the pipetting channel section of the coupling formation (22) forms a section,
**characterized in that** the pipetting device includes a pipette piston (16) which, at least on its longitudinal end (with 16a) nearer to the pressure-imparting orifice, is dimensioned and is movably accommodated on the pipetting device in the pipetting channel (10) such that it is introducible axially into the pipetting channel section of the coupling assembly (22) and retractable again therefrom so far that its longitudinal end (with 16a) nearer to the pressure-imparting orifice is closer to the pressure-imparting orifice (26) than the coupling projection (44).

17. Pipetting device including a coupling formation (22) according to one of the preceding claims and including a pipetting channel (10) of which the pipetting channel section of the coupling formation (22) forms a section, according to claim 16, wherein the pipetting device includes an axial slip-off device (12), which is formed to produce an abutting engagement during a slipping-off movement via an abutment surface (64) with a counterabutment surface (66) of an implement (30) coupled with the coupling formation (22), for example a pipette tip (30) or a laboratory instrument, laboratory tool and the like, in order to slip the pipette tip (30) off of the coupling formation (22) by continuing the slipping-off movement after producing of the abutting engagement, and thus decouple from the pipetting device,
**characterized in that** the abutment surface (64) of the slip-off device (12) is inclined and/or curved with respect to the axial movement direction (U) of the slipping-off movement.

## Revendications

1. Arrangement d'accouplement (22) d'un canal de pipettage (10) d'un dispositif de pipettage pour accoupler un dispositif de travail (30) comme par exemple une pointe de pipette (30) ou un appareil de laboratoire, outil de laboratoire etc., l'arrangement d'accouplement (22) entourant une section de canal de pipettage qui s'étend le long d'un axe de canal de pipettage (P) définissant un sens axial, l'arrangement d'accouplement (22) comprenant en outre une ouverture de transmission de pression (26) à son extrémité longitudinale libre (22b) dans laquelle la section de canal de pipettage aboutit, et comprenant à sa surface enveloppante entourant l'axe de canal de pipettage (P) et s'étendant principalement dans le sens axial et dans les sens circonférentiel autour de l'axe de canal de pipettage (P) radialement extérieure par rapport à l'axe de canal de pipettage (P) une projection d'accouplement (44) flexible dans le sens radial,
**caractérisé en ce que** la projection d'accouplement (44) est prévu essentiellement non-déformable mais radialement déplaçable à un arrangement de ressort (42) élastique dans le sens radial.

2. Arrangement d'accouplement selon la revendication 1,
**caractérisé en ce que** la projection d'accouplement (44) sans charge peut être déplacée radialement contre la force élastique de l'arrangement de ressort (42) par une force radiale dirigée radialement vers l'intérieur envers l'axe de canal de pipettage (P).

3. Arrangement d'accouplement selon les revendication 1 ou 2,
**caractérisé en ce que** la projection d'accouplement (44) entoure entièrement l'axe de canal de pipettage (P).

4. Arrangement d'accouplement selon une des revendications précédentes,
**caractérisé en ce que** l'arrangement de ressort (42) comprend au moins un arrangement de ressort en feuille (46) qui s'étend d'une extrémité axiale plus loin de l'ouverture de transmission de pression vers une extrémité axiale plus proche de l'ouverture de transmission de pression.

5. Arrangement d'accouplement selon la revendication 4,
**caractérisé en ce que** ledit au moins un arrangement de ressort en feuille (46) est à son extrémité axiale plus proche de l'ouverture de transmission de pression fermement lié à une section terminale (38) de l'arrangement d'accouplement (22) comprenant l'ouverture de transmission de pression (26) et **en ce que** l'arrangement de ressort en feuille (46) est à son extrémité axiale plus loin de l'ouverture de transmission de pression fermement lié à une section du côté canal (40) de l'arrangement d'accouplement (22).

6. Arrangement d'accouplement selon une des revendications précédentes,
**caractérisé en ce que** la projection d'accouplement (44) est divisée en une pluralité de projections d'accouplement partielles (44) dont chacune est prévue à un arrangement de ressort (42) élastique dans le sens radial, en particulier à un arrangement de ressort en feuille (46).

7. Arrangement d'accouplement selon la revendication 6,
**caractérisé en ce que** qu'il comprend une pluralité d'arrangements de ressort en feuille (46), de préférence parallèles, dont chacun comprend une projection d'accouplement partielle (44).

8. Arrangement d'accouplement selon la revendication 7,
**caractérisé en ce que** deux arrangements de ressort en feuille (46) directement adjacents dans le sens circonférentiel comprennent entre eux une fente circonférentielle (48) et sont donc espacés dans le sens circonférentiel.

9. Arrangement d'accouplement selon une des revendications 7 ou 8,
**caractérisé en ce qu'**au moins une projection d'accouplement partielle (44) de préférence une pluralité de projections d'accouplement partielles (44), de manière encore plus préférée toutes les projections d'accouplement partielles (44) sont adaptées en une seule pièce avec l'arrangement de ressort en feuille (46) qui les porte respectivement.

10. Arrangement d'accouplement selon une des revendications précédentes, en particulier en prenant en considération la revendication 5,
**caractérisé en ce qu'**à une section d'extrémité (38) de l'arrangement d'accouplement (22) comprenant l'ouverture de transmission de pression (26) un arrangement de sécurisation de position (54, 58) et prévu pour sécuriser le positionnement d'une pointe de pipette (30) accouplée à l'arrangement d'accouplement (22) relatif à l'arrangement d'accouplement (22).

11. Arrangement d'accouplement selon la revendication 10,
**caractérisé en ce que** ledit arrangement de sécurisation de position (54, 58) comprend un palier radial (à 54) ou/et une section cylindrique (58) s'étendant le long de l'axe de canal de pipetage ou/et une surface conique.

12. Arrangement d'accouplement selon une des revendications précédentes,
**caractérisé en ce qu'**il comprend une bague d'étanchéité (50) entourant l'arrangement d'accouplement (22) qui est adaptée pour rendre étanche au gaz contre l'environnement extérieur un volume de pipetage (28) à l'intérieur de la pointe de pipette (30) à une section d'accouplement (30a) de la pointe de pipette (30) dans un état d'accouplement avec la pointe de pipette (30) accouplée à l'arrangement d'accouplement (22).

13. Arrangement d'accouplement selon la revendication 12,
**caractérisé en ce que** ladite bague d'étanchéité (50) est adaptée se rajeunissant vers l'ouverture de transmission de pression (26) au moins dans une section axiale.

14. Arrangement d'accouplement selon la revendication 12 ou 13,
**caractérisé en ce que** ladite bague d'étanchéité (50) est arrangée plus loin de l'extrémité longitudinale libre (22b) de l'arrangement d'accouplement (22) que la projection d'accouplement (44).

15. Arrangement d'accouplement selon une des revendications précédentes,
**caractérisé en ce que** l'arrangement de ressort (42), la projection d'accouplement (44), une section d'extrémité (38) de l'arrangement d'accouplement comprenant l'ouverture de transmission de pression (26), et une section du côté canal (40) de l'arrangement d'accouplement située axialement plus loin de l'extrémité longitudinale libre (22b) de l'arrangement d'accouplement (22) que l'arrangement de ressort (42) sont formés en une seule pièce.

16. Dispositif de pipetage avec un arrangement d'accouplement (22) selon une des revendications précédentes et avec un canal de pipetage (10) dont la section de canal de pipetage de l'arrangement d'accouplement (22) forme une section,
**caractérisé en ce que** le dispositif de pipetage comprend un piston de pipetage (16) qui au moins à son extrémité longitudinale plus proche de l'ouverture de transmission de pression (à 16a) est dimensionné de sorte et est reçu au dispositif de pipetage dans le canal de pipetage de manière mobile de sorte qu'il peut être inséré axialement dans la section de canal de pipetage de l'arrangement d'accouplement (22) et peut être sorti de cette dernière de sorte que son extrémité plus proche de l'ouverture de transmission de pression (à 16a) est plus proche de l'ouverture de transmission de pression (26) que la projection d'accouplement (44).

17. Dispositif de pipetage avec un arrangement d'accouplement (22) selon une des revendications précédentes et avec un canal de pipetage (10) dont la section de canal de pipetage de l'arrangement d'accouplement (22) forme une section, selon la revendication 16, le dispositif de pipetage comprenant un dispositif de raclage (12) axialement mobile qui est adapté pour entrer pendant un mouvement axiale de raclage avec une surface d'appui (64) en engagement d'appui avec une contre-surface d'appui (66) d'un dispositif de travail (30) accouplé à l'arrangement d'accouplement (22), par exemple d'une pointe de pipette (30) ou d'un appareil de laboratoire, outil de laboratoire etc. pour racler, en continuant le mouvement de raclage après la réalisation de l'engagement en appui, la pointe de pipette (30) de l'arrangement d'accouplement (22) et pour la découpler de cette manière du dispositif de pipetage,
**caractérisé en ce que** la surface d'appui (64) du dispositif de raclage (12) est inclinée ou courbée par rapport au sens de mouvement axial (U) du mouvement de raclage.
